# FASCICULE DE BREVET EUROPEEN

(11) **EP 2 737 589 B1**
(45) Date de publication et mention de la délivrance du brevet: **09.09.2015**
(21) Numéro de dépôt: 12740951.4
(22) Date de dépôt: 26.07.2012
(51) Int. Cl.: H02J 3/38, H02J 3/00

(54) **SYSTEME DE PRODUCTION ET DE DISTRIBUTION D'ENERGIE ELECTRIQUE SUR UN RESEAU ELECTRIQUE ET METHODE D'OPTIMISATION ASSOCIEE**
SYSTEM ZUR ERZEUGUNG UND VERTEILUNG ELEKTRISCHER ENERGIE IN EINEM STROMNETZ UND ZUGEHÖRIGES OPTIMIERUNGSVERFAHREN
SYSTEM FOR PRODUCING AND DISTRIBUTING ELECTRICAL ENERGY OVER AN ELECTRICAL NETWORK, AND ASSOCIATED OPTIMIZATION METHOD

(30) Priorité: 28.07.2011 FR 1156920
(43) Date de publication de la demande: 04.06.2014
(73) Titulaire: Société Technique pour l'Energie Atomique Technicatome, 91190 Villiers Le Bacle (FR)
(72) Inventeur: ROBERTS, Jonathan, F-91400 Orsay (FR); AUGUSTIN, Xavier, F-92000 Nanterre (FR); DELLINGER, Jean-Claude, F-69110 Sainte Foy Les Lyon (FR)
(74) Mandataire: Lebkiri, Alexandre
(86) Numéro de dépôt international: PCT/EP2012/064658
(87) Numéro de publication internationale: WO 2013/014220

(56) Documents cités:
- WO-A1-2011/012134
- US-A1- 2007 282 495

## Description

La présente invention concerne un système de production d'énergie électrique (comportant une part importante d'énergies renouvelables intermittentes distribuée sur un réseau électrique ainsi qu'une méthode d'optimisation et de dimensionnement dudit système dans son intégralité afin de supprimer le recours à l'utilisation de moyens de stockage d'énergie pour palier au caractère intermittent des énergies renouvelables.

Pour répondre aux variations intra-journalière de la demande d'électricité et maintenir un équilibre entre la production et la demande d'énergie électrique, des entités de productions spécifiques ont été développées et conçues pour ajuster leur production et ainsi fournir de l'énergie électrique sur demande, autrement dit ces entités spécifiques sont conçues pour faire du suivi de charge. Ces entités de production spécifiques sont par exemple des centrales hydro-électriques, des centrales thermiques au charbon, gaz etc.

Ces entités spécifiques viennent en complément des entités de production de masse qui sont des centrales conçues pour produire de grandes quantités d'énergie au plus bas prix et permettent de fournir la plus grande partie de l'énergie électrique distribuée sur un réseau. Ce sont généralement des centrales nucléaires ou encore des centrales fossiles qui elles fournissent de l'électricité dite de base.

Enfin, une dernière catégorie de centrale permet de répondre aux pointes de consommation. Les pointes observées sont de deux types et cumulables : la pointe journalière qui se situe généralement en début de soirée et qui est principalement liée au comportement des ménages et la pointe saisonnière qui est liée aux conditions climatiques du moment.

Dans le cas particulier de la France, les centrales nucléaires, produisant l'électricité de base, participent également au fonctionnement en suivi de charge sans avoir été conçues à l'origine pour cela, entraînant par conséquent une usure prématurée des installations (usure des combustibles, usure des actionneurs, ...). Ces usures prématurées ne permettent donc pas d'avoir une rentabilité optimum de ces centrales nucléaires.

La volonté de réduire les émissions des gaz à effet de serre est à l'origine du développement et de l'utilisation des énergies renouvelables comme sources principales d'électricité d'un réseau ou encore comme sources secondaires en complément d'une source principale. Parmi les différentes énergies renouvelables, la production d'électricité à partir de l'énergie solaire, éolienne et de la mer sont aujourd'hui les trois sources d'énergie les plus prometteuses et pour lesquelles des développements technologiques sont importants.

Cependant, ces sources d'énergie renouvelable sont des sources intermittentes, aléatoires et volatiles. De plus, la production d'électricité n'est pas forcément en phase avec la demande du réseau, que ce soit temporellement ou quantitativement. Ainsi, le développement de l'utilisation de ces énergies renouvelables est freiné notamment par la difficulté de maintien en temps réel de l'équilibre entre la production et la consommation d'électricité.

Afin de résoudre ce problème, de nombreuses recherches et de nombreux développements sont en cours afin de pouvoir stocker le surplus d'énergie produite par ces énergies renouvelables de manière à pouvoir la restituer en période d'insuffisance de production. La possibilité de stocker cette énergie permet ainsi de pouvoir la restituer sur le réseau électrique en fonction du besoin et de la production.

En revanche, les difficultés techniques pour réaliser du stockage de la production des énergies renouvelables sont nombreuses et les solutions techniques développées ne sont pas encore viables ni exploitables à grande échelle à l'exception notable des Stations de Transfert d'Energie par Pompage (centrale hydroélectrique réversible).

Pour pallier le caractère intermittent, volatile et aléatoire de l'énergie électrique produite par des sources d'énergie renouvelable, le document US6671585 décrit un exemple de système de production d'énergie, une méthode et un programme informatique apte à améliorer la valeur commerciale de l'énergie électrique issue d'une installation utilisant de l'énergie renouvelable. Le système de production d'énergie décrit est formé par une combinaison d'au moins trois générateurs électriques, tels qu'une centrale nucléaire, une centrale hydro-électrique, une centrale à gaz ainsi qu'une source d'énergie renouvelable. De façon plus précise le système de production d'énergie décrit comporte un générateur électrique apte à fonctionner à régime constant, une source d'énergie renouvelable produisant de l'énergie électrique de manière variable et un troisième générateur électrique piloté en ligne afin que sa production d'énergie soit ajustée de manière à maintenir l'équilibre du réseau électrique en fonction de la quantité d'énergie produite par la source d'énergie renouvelable (éolienne).

La quantité d'énergie produite en plus ou en moins, par le générateur électrique piloté en ligne, par rapport à sa prévision est comptabilisée et inscrite dans un compte d'énergie virtuelle stockée. En cas de sous-production d'électricité d'origine renouvelable, la centrale pilotée compense et débite le compte de l'éolienne. A l'inverse, le compte est crédité en cas de surplus de production d'électricité d'origine renouvelable par rapport à la demande.

Un tel système permet de pallier au comportement particulier de certaines sources d'énergie renouvelable - une extrémité de la chaine énergétique - sans pour autant se prémunir de l'usure accélérée des entités de production de masse qui continuent à faire du suivi de charge, ce dernier ayant pour origine la demande en énergie qui se situe à l'autre extrémité de la chaine énergétique.

Un autre système de distribution d'énergie électrique selon l'état de la technique est connu du document WO-A-2011/012134

Dans ce contexte, l'invention vise à proproser un système de production et de distribution d'énergie électrique sur un réseau permettant de résoudre les problèmes mentionnés précédemment.

A cette fin, l'invention propose un système de production et de distribution d'énergie électrique sur un réseau électrique délimité par une zone géographique donnée caractérisé en ce qu'il comporte :
- une entité de production d'énergie électrique principale fonctionnant en régime permanent et produisant au moins une partie de l'énergie électrique produite sur ledit réseau ;
- une seconde entité de production d'énergie électrique à partir d'énergie renouvelable, non associée à des moyens de stockage d'énergie, produisant de façon intermittente l'énergie électrique produite sur ledit réseau ;
- une troisième entité de production d'énergie électrique apte à fonctionner en suivi de charge et apte à fournir l'énergie produite sur ledit réseau ;
ledit système étant dimensionné de sorte que le profil d'évolution du potentiel énergétique total sur un an de ladite zone géographique, correspondant à la somme du profil d'évolution de la quantité d'énergie électrique distribuée sur un an par ladite entité de production d'énergie électrique principale et du profil d'évolution de la quantité d'énergie électrique produite sur un an par ladite deuxième entité de production d'énergie électrique à partir d'énergie renouvelable, est inférieur au profil d'évolution de la demande d'énergie électrique sur un an dudit réseau délimité par ladite zone géographique donnée.

On entend par le terme « énergie renouvelable », les formes d'énergie qui se renouvellent assez rapidement pour être considérée comme inépuisables à l'échelle humaine. Ainsi, à titre d'exemple, l'énergie solaire, l'énergie éolienne, l'énergie houlomotrice, l'énergie hydrolienne sont des formes d'énergie renouvelable.

On entend par le terme « entité de production » aussi bien un module unique de production qu'un ensemble de modules de production d'énergie électrique.

Le système de production et de distribution selon l'invention, permet ainsi de s'affranchir des contraintes de stockage des excédents de production d'énergie renouvelable en période de surproduction par rapport à la demande du réseau (énergie qui est réinjectée dans le réseau lorsque la demande est supérieure à la production).

De plus, les fluctuations de demande du réseau sont comblées par une troisième entité de production complémentaire destinée et dimensionnée de manière à prendre la responsabilité complète du suivi de charge, permettant ainsi la distribution directe et favorisée sur le réseau électrique de l'électricité produite par les énergies renouvelables sur le réseau.

Grâce à l'invention, l'utilisation d'entités de production d'énergie électrique (avantageusement de faible puissance) dédiées et conçues dans le but de faire du suivi de charge permet de concevoir et de faire fonctionner des entités de production de masse en régime permanent. Ainsi, l'efficacité économique et énergétique de ces entités de production de masse est améliorée par un fonctionnement à une puissance nominale. Ces entités de production de masse ne participant plus au suivi de charge, leur durée de vie est augmentée et les coûts d'exploitation sont réduits.

Le dimensionnement et le fonctionnement des installations de production d'électricité sont ainsi optimisés.

Par ailleurs, les troisièmes entités de production aptes à fonctionner en suivi de charge sont avantageusement localisés géographiquement au plus près des zones de consommations afin d'optimiser le système logistique de production et de distribution d'énergie électrique.

Les troisièmes entités de production d'énergie électrique aptes à fonctionner en suivi de charge sont avantageusement formées par un ou plusieurs modules de puissance fabriqués en grande série.

Le système selon l'invention permet également de s'affranchir de l'utilisation d'entités de production d'appoint alimentées en ressources fossiles et des entités de production polluantes soumises à des normes de rejet.. Ainsi, le système selon l'invention permet de réduire les émissions polluantes par la réduction voire la suppression de l'utilisation de ce type d'entités.

Grâce à l'invention, les énergies renouvelables sont valorisées de façon optimum puisque leur caractère aléatoire, intermittent et volatile n'est plus un inconvénient. Ainsi, le système selon l'invention permet de participer au développement commercial de ces technologies.

Le système de production et de distribution d'énergie électrique sur un réseau selon l'invention peut également présenter une ou plusieurs des caractéristiques ci-dessous, considérées individuellement ou selon toutes les combinaisons techniquement possibles :
- ladite entité de production d'énergie principale distribue au moins 50% de l'énergie l'électrique nécessaire pour répondre à la demande dudit réseau ;
- ladite première entité de production et ladite troisième entité de production d'énergie électrique apte à fonctionner en suivi de charge sont formées par une même unité de production ;
- ladite troisième entité de production d'énergie électrique est formée par un unique module ou une pluralité de module de puissance identique ;

- la puissance de chacun des modules de ladite troisième entité de production d'énergie électrique est comprise entre 100 MWe et 500 MWe;
- ladite troisième entité de production d'énergie électrique est un petit réacteur nucléaire ;
- ladite seconde entité de production d'énergie électrique à partir d'énergie renouvelable et/ou ladite troisième entité de production d'énergie électrique est implantée dans ladite zone géographique donnée ;
- ledit système est dimensionné de sorte qu'une fenêtre de pilotage, définie par l'écart minimum Eₘᵢₙ et l'écart maximum Eₘₐₓ entre ledit profil d'évolution du potentiel énergétique total produit sur un an et ledit profil d'évolution de la demande d'énergie électrique sur un an dudit réseau, est comprise dans un intervalle de production optimale de ladite troisième entité de production d'énergie électrique ;
- ledit dimensionnement pour que ladite fenêtre de pilotage soit comprise dans l'intervalle de production optimale de ladite troisième entité de production d'énergie électrique est réalisé par redimensionnement de la puissance de ladite troisième entité de production d'énergie électrique ;
- ladite troisième entité de production d'énergie électrique est constituée par au moins un module de puissance ; ledit dimensionnement pour que ladite fenêtre de pilotage soit comprise dans l'intervalle de production optimale de ladite troisième entité de production d'énergie électrique étant réalisé par l'ajustement du nombre de modules de puissance formant ladite troisième entité de production sur ladite zone géographique donnée.

L'invention a également pour objet une méthode d'optimisation d'un système de production et de distribution d'énergie électrique selon l'invention comportant les étapes consistant à :
- estimer sur une année un profil d'évolution de la demande d'énergie électrique dudit réseau, délimité par ladite zone géographique donnée ;
- calculer un profil d'évolution de la quantité d'énergie électrique distribuée sur un an par ladite première entité de production d'énergie électrique sur ledit réseau ;
- évaluer un profil d'évolution de la quantité d'énergie électrique produite sur un an par ladite deuxième entité de production d'énergie électrique à partir d'énergie renouvelable et distribuée sur ledit réseau ;
- comparer ledit profil d'évolution du potentiel énergétique total produit sur un an sur ladite zone géographique avec ledit profil d'évolution de la demande d'énergie électrique estimée, ledit profil d'évolution dudit potentiel énergétique total produit sur un an correspondant à la somme dudit profil d'évolution de ladite quantité d'énergie électrique distribuée sur un an par ladite première entité de production d'énergie électrique et dudit profil d'évolution de la quantité d'énergie électrique produite sur un an par ladite deuxième entité de production d'énergie électrique à partir d'énergie renouvelable ;
- modifier l'étendue de ladite zone géographique ou la quantité d'énergie électrique distribuée sur ledit réseau par ladite entité de production principale si ledit profil d'évolution dudit potentiel énergétique annuel total de ladite zone géographique est inférieur au profil d'évolution de ladite demande ;
- déterminer l'écart minimum Eₘᵢₙ et l'écart maximum Eₘₐₓ entre ledit profil d'évolution dudit potentiel énergétique total produit sur un an et ledit profil d'évolution de ladite demande d'énergie électrique sur un an, ledit écart minimum et ledit écart maximum formant une fenêtre de pilotage ;
- comparer ladite fenêtre de pilotage déterminée lors de l'étape précédente avec un intervalle de production optimale d'énergie électrique de ladite troisième entité de production d'énergie électrique apte à fonctionner en suivi de charge ;
- modifier l'étendue de ladite zone géographique et/ou dimensionner ladite troisième entité de production et/ou, dans l'hypothèse où la troisième entité de production est formée par un ou plusieurs modules de puissance identique, adapter le nombre de modules de puissance formant ladite troisième entité de production de manière à ce que ladite fenêtre de pilotage soit comprise dans intervalle de production optimale de ladite troisième entité de production d'énergie électrique.

L'invention consiste à définir et mettre en oeuvre la méthode qui permet de choisir une combinaison optimum entre les différents ensembles d'entités de production permettant notamment une valorisation optimale des énergies renouvelables sans avoir recours à des installations de stockage. Pour cela la troisième entité de production est dimensionnée pour répondre à tout moment à la demande d'énergie non couverte par la première et la seconde entité de production notamment lorsque le niveau de production de la seconde entité ne peut répondre à la demande (manque de soleil, de vent,...).

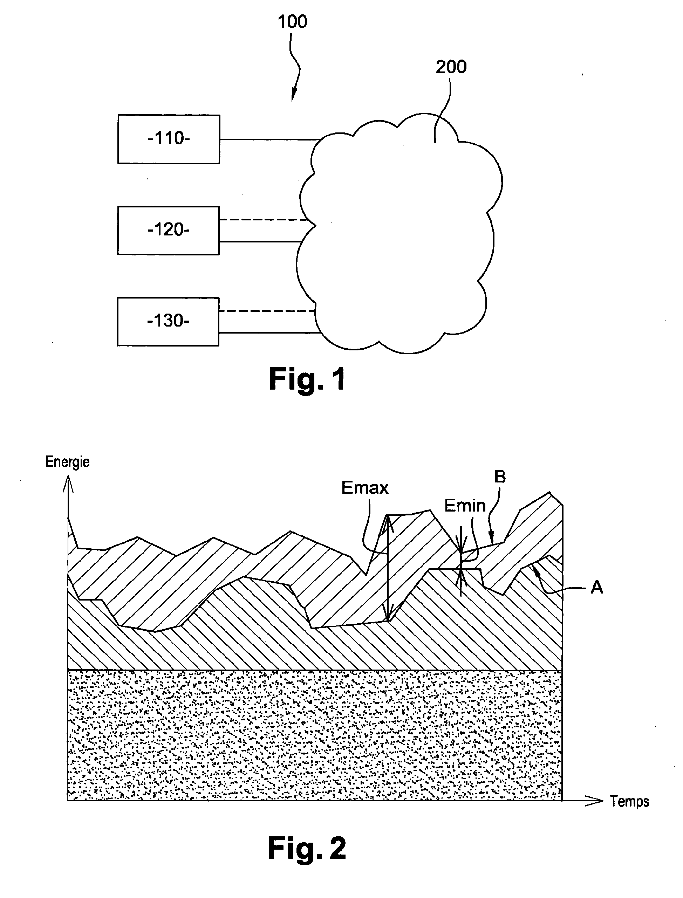

Ainsi la troisième entité de production est dimensionnée de manière à couvrir les besoins énergétiques définis entre le profil d'évolution du potentiel énergétique total produit sur un an (courbe A de la figure 2) et le profil d'évolution de la demande d'énergie électrique sur un an (courbe B de la figure 2).

Selon un mode avantageux, ledit intervalle de production optimale de ladite troisième entité de production d'énergie électrique se situe entre 40% et 80% de la puissance maximale de ladite entité ou de chaque module de puissance formant ladite troisième entité de production.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une représentation schématique d'un système de production et de distribution d'énergie électrique sur un réseau selon l'invention ;
- la figure 2 est un graphique illustrant le profil sur une année de la répartition demande/production d'énergie électrique pour une zone géographique donnée.

Dans toutes les figures, les éléments communs portent les mêmes numéros de référence sauf précision contraire.

La figure 1 illustre schématiquement un premier exemple d'implantation de différentes entités d'énergie électrique permettant d'alimenter en énergie électrique une zone géographique donnée.

Le système de production et de distribution 100 est formé par ;
- une première entité de production d'énergie électrique 110, dite entité de production d'énergie principale, fonctionnant en régime permanent et distribuant au moins une partie de l'énergie électrique produite sur un réseau électrique 200 correspondant à la zone géographique donnée ;
- une seconde entité de production d'énergie électrique à partir d'énergie renouvelable 120, directement distribué sur le réseau électrique 200 et donc non associée à des moyens de stockage d'énergie électrique, et distribuant de façon intermittente l'énergie électrique produite sur le réseau 200 ;
- une troisième entité de production d'énergie électrique 130 apte à fonctionner en suivi de charge en fonction de la demande du réseau 200 et de la quantité d'énergie électrique fournit par ladite première entité de production 110 et l'entité de production d'énergie renouvelable 120.

De façon avantageuse, l'entité de production d'énergie renouvelable 120 produit de l'électricité à partir de l'énergie solaire, de l'énergie éolienne ou encore de l'énergie de la mer (houle, courant, ...).

De façon avantageuse, la première entité de production 110 est formée par au moins une centrale électrogène dimensionnée et optimisée pour fonctionner en régime permanent.

De façon avantageuse, la troisième entité de production d'énergie électrique 130 est formée par au moins un petit réacteur nucléaire, typiquement d'une puissance comprise entre 100 et 500 mégawatts électrique (MWe).

Le système de production et de distribution 100 est associé à une méthode d'optimisation permettant de dimensionner et d'exploiter le système de production et de distribution de manière optimum sur une zone géographique donnée.

Dans un premier temps, il convient de délimiter la zone géographique apte à recevoir l'électricité produite par le système.

Ainsi, pour cette zone géographique, la méthode d'optimisation selon l'invention consiste à :
- calculer, à partir des données historiques de production, le profil de la partie de la production d'électricité de la première entité de production de masse 110 distribué sur un an sur cette zone géographique donnée ;
- estimer par simulations, à partir des données de ressources naturelles (vent, solaire, houle, courant, ...) et à partir des caractéristiques des entités de production d'énergie renouvelable existantes (ou envisagées) alimentant ladite zone géographique, le profil de la quantité d'énergie renouvelable à disposition de la zone géographique pendant un an.

Le profil de la quantité d'énergie électrique distribuée sur un an par la première entité de production de masse 110 et le profil de la quantité d'énergie électrique produite sur un an par les entités de production d'énergie renouvelable 120 définissent un profil d'un potentiel énergétique à disposition pendant un an sur ladite zone géographique. Le profil d'évolution du potentiel énergétique de la zone géographique est représenté sur la figure 2 par la courbe A.

La méthode d'optimisation consiste également à calculer, à partir des données historiques de consommation, le profil de la demande du réseau sur un an délimité par cette zone géographique. Le profil d'évolution de la demande en énergie est représenté par la courbe B sur la figure 2.

Si la demande en énergie est au moins ponctuellement inférieure au potentiel énergétique produit par l'entité principale 110 et par la deuxième entité d'énergie renouvelable 120 (i.e. la courbe A croise la courbe B), il y a alors une surproduction d'énergie. La méthode et le système selon l'invention consistant à s'affranchir du stockage de l'énergie électrique produite provenant de l'énergie renouvelable, tout en évitant de perdre de l'énergie générée par des entités à énergie renouvelable, la méthode d'optimisation comporte une étape consistant à redéfinir la zone géographique et/ou à réaffecter de l'énergie électrique produite à partir d'énergie renouvelable pour une autre zone géographique, et/ou à modifier la quantité d'énergie affectée à la zone géographique par l'entité de production de masse 110, de manière à ce que la courbe B (demande énergétique) soit strictement supérieure à la courbe A (potentiel énergétique produit) quelle que soit la position sur l'échelle des temps (figure 2).

Dans un second temps, la méthode d'optimisation selon l'invention consiste à déterminer le nombre de modules et la puissance de la troisième entité de production 130 de manière à respecter un intervalle de fonctionnement optimal de cette entité.

Pour cela, la méthode d'optimisation consiste à déterminer l'écart minimum Eₘᵢₙ et l'écart maximum Eₘₐₓ entre la demande en énergie (courbe B) et le potentiel énergétique (courbe A) disponible. Cet écart minimum Eₘᵢₙ et cet écart maximum Eₘₐₓ définissent une fenêtre de pilotage que la troisième entité de production d'énergie électrique 130 devra fournir en suivi de charge.

Si les bornes de cette fenêtre sont inférieures à l'intervalle de production optimale de la troisième entité de production 130, alors on obtient l'équilibre du réseau sur la zone géographique donnée sans stockage d'énergie. A titre d'exemple, l'intervalle de production optimale correspondant à un fonctionnement entre 40% et 80% de la puissance maximale de la troisième entité de production 130. Cette limite de production d'énergie électrique détermine les bornes de fonctionnement en suivi de charge de la troisième entité de production 130, permettant notamment de spécifier la fenêtre de fonctionnement du petit réacteur nucléaire.

Si la borne supérieure de cette fenêtre est supérieure à l'intervalle de production optimale de la troisième entité de production 130, alors il est nécessaire de diminuer la borne supérieure de cette fenêtre (i.e. diminuer l'écart maximum Eₘₐₓ). Pour cela, il est possible :
- soit de modifier la délimitation de la zone géographique de manière à réduire la demande énergétique (courbe B) de la zone ;
- soit de modifier la capacité de fonctionnement optimale de la troisième entité de production, et donc la quantité d'énergie délivrée pour un fonctionnement en suivi de charge dans la plage de production optimale.

Si la borne inférieure de cette fenêtre est inférieure à l'intervalle de production optimale de la troisième entité de production 130, alors il est nécessaire de re-délimiter la zone géographique à considérer (i.e. l'agrandir) de manière à augmenter la demande d'énergie de la zone géographique.

Ainsi, la méthode d'optimisation selon l'invention consiste à déterminer le nombre de modules et/ou la puissance de la troisième entité de production d'énergie 130 afin de respecter un intervalle de production optimale d'énergie électrique pour laquelle elle est conçue.

Dans un premier mode de réalisation, la modification de la capacité optimale de production de la troisième entité de production 130 peut être réalisée par un redimensionnement de la troisième entité de production 130.

Dans un second mode de réalisation dans lequel la troisième entité de production 130 est formée par un ou plusieurs modules de puissance identique, la modification de la capacité de production est réalisée par l'ajustement du nombre de modules de puissance formant la troisième entité de production 130 dans la zone géographique.

Dans ce second mode de réalisation, la capacité optimale de production de la troisième entité de production 130 est donc modifiée par l'ajout ou la suppression de module. Ce second mode de réalisation a pour avantage de simplifier la production de ce type d'entités de production destinées à faire du suivi de charge par la réalisation en grande série de module de puissance électrique identique. Ce second mode de réalisation permet également de réduire les coûts de production de telles entités.

La détermination de l'équilibre demande/production et le dimensionnement du système de production et de distribution peuvent être obtenus par des moyens logiciels, des calculateurs, par des itérations successives sur la zone géographique considérée tout en vérifiant que la demande énergétique de la zone (courbe B) est toujours supérieure au potentiel énergétique (courbe A) produit par la première entité 110 et par la seconde entité d'énergie renouvelable 120.

Le système selon l'invention a été particulièrement décrit avec une première entité de production d'énergie électrique de masse dépendante physiquement d'une troisième entité de production d'énergie électrique apte à fonctionner en suivi de charge ; toutefois, dans un mode de réalisation particulier de l'invention, la première entité de production de masse et la troisième entité de suivi de charge sont formées physiquement par une même unité de production pouvant être formée par un unique module de puissance ou par une pluralité de module de puissance, avantageusement identique.

Les autres avantages de l'invention sont notamment les suivants :
- améliorer l'attractivité et l'intérêt économique énergies renouvelables par la compensation de leur inconvénient majeur (i.e. leur intermittence) ;
- améliorer l'efficacité économique et énergétiques des centrales produisant de l'énergie électrique en masse par leur fonctionnement à une puissance nominale constante ;
- augmentation de la durée de vie des entités de production de masse ;
- suppression du recours au stockage d'énergie (stockage de ressource ou stockage d'énergie renouvelable produite) :
- réduction de la volatilité des prix de l'électricité par une adaptation permanente, en temps réel, de l'offre par rapport à la demande y compris lors des variations intermittentes de la production d'électricité issue des énergies renouvelables ;
- réduction des émissions polluantes (CO2, NOx, SOx, particules,...) en réduisant (voire en supprimant) le recours aux centrales d'appoints alimentées en ressources fossiles ;
- optimisation du dimensionnement et du fonctionnement des réseaux de production et de distribution d'énergie électrique grâce à l'implantation astucieuse des entités de production de faible puissance fonctionnant en suivi de charge (en terre/onshore ou en mer/ offshore) ;
- optimisation du dimensionnement des installations de production d'énergie électrique sur la base de la valorisation optimale des énergies renouvelables.

## Revendications

1. Système de production et de distribution d'énergie électrique (100) sur un réseau électrique (200) délimité par une zone géographique donnée comportant :
- une première entité de production d'énergie électrique (110), dite entité principale, fonctionnant en régime permanent et produisant au moins une partie de l'énergie électrique produite sur ledit réseau (200) ;
- une seconde entité de production d'énergie électrique à partir d'énergie renouvelable (120), non associée à des moyens de stockage d'énergie, produisant de façon intermittente l'énergie électrique produite sur ledit réseau (200);
- une troisième entité de production d'énergie électrique (130) apte à fonctionner en suivi de charge et apte à fournir l'énergie produite sur ledit réseau (200) ; **caractérisé en ce que**
ledit système est dimensionné de sorte que le profil d'évolution du potentiel énergétique total sur un an de ladite zone géographique, correspondant à la somme du profil d'évolution de la quantité d'énergie électrique distribuée sur un an par ladite entité de production d'énergie électrique principale (110) et du profil d'évolution de la quantité d'énergie électrique produite sur un an par ladite deuxième entité de production d'énergie électrique à partir d'énergie renouvelable (120), est inférieur au profil d'évolution de la demande d'énergie électrique sur un an dudit réseau (200) délimité par ladite zone géographique donnée

2. Système de production et de distribution d'énergie électrique (100) selon la revendication précédente **caractérisé en ce que** ladite entité de production d'énergie principale (110) distribue au moins 50% de l'énergie l'électrique nécessaire pour répondre à la demande dudit réseau (200).

3. Système de production et de distribution d'énergie électrique (100) selon l'une des revendications précédentes **caractérisé en ce que** ladite première entité de production (110) et ladite troisième entité de production d'énergie électrique (130) apte à fonctionner en suivi de charge sont formées par une même unité de production.

4. Système de production et de distribution d'énergie électrique (100) selon l'une des revendications précédentes **caractérisé en ce que** ladite troisième entité de production d'énergie électrique (130) est formée par un unique module ou par une pluralité de module de puissance identique.

5. Système de production et de distribution d'énergie électrique (100) selon la revendication précédente **caractérisé en ce que** la puissance de chacun des modules de ladite troisième entité de production d'énergie électrique (130) est comprise entre 100 MWe et 500 MWe.

6. Système de production et de distribution d'énergie électrique (100) selon l'une des revendications précédentes **caractérisé en ce que** ladite troisième entité de production d'énergie électrique (130) est un petit réacteur nucléaire.

7. Système de production et de distribution d'énergie électrique (100) selon l'une des revendications précédentes **caractérisé en ce que** ladite seconde entité de production d'énergie électrique à partir d'énergie renouvelable (120) et/ou ladite troisième entité de production d'énergie électrique (130) est implantée dans ladite zone géographique donnée.

8. Système de production et de distribution d'énergie électrique (100) selon la revendication précédente **caractérisé en ce que** ledit système est dimensionné de sorte qu'une fenêtre de pilotage, définie par l'écart minimum (Eₘᵢₙ) et l'écart maximum (Eₘₐₓ) entre ledit profil d'évolution du potentiel énergétique total produit sur un an et ledit profil d'évolution de la demande d'énergie électrique sur un an dudit réseau (200), est comprise dans un intervalle de production optimale de ladite troisième entité de production d'énergie électrique (130).

9. Système de production et de distribution d'énergie électrique (100) selon la revendication précédente **caractérisé en ce que** ledit dimensionnement pour que ladite fenêtre de pilotage soit comprise dans l'intervalle de production optimale de ladite troisième entité de production d'énergie électrique (130) est réalisé par redimensionnement de la puissance de ladite troisième entité de production d'énergie électrique (130).

10. Système de production et de distribution d'énergie électrique (100) selon l'une des revendication précédentes **caractérisé en ce que** ladite troisième entité de production d'énergie électrique (130) est constituée par au moins un module de puissance ; ledit dimensionnement pour que ladite fenêtre de pilotage soit comprise dans l'intervalle de production optimale de ladite troisième entité de production d'énergie électrique (130) étant réalisé par l'ajustement du nombre de modules de puissance formant ladite troisième entité de production (130) sur ladite zone géographique donnée.

11. Méthode d'optimisation d'un système de production et de distribution d'énergie électrique (100) selon l'une des revendications précédentes, ladite méthode d'optimisation comportant les étapes consistant à
- estimer sur une année un profil d'évolution de la demande d'énergie électrique dudit réseau (200), délimité par ladite zone géographique donnée ;
- calculer un profil d'évolution de la quantité d'énergie électrique distribuée sur un an par ladite première entité de production d'énergie électrique (110) sur ledit réseau (200) ;
- évaluer un profil d'évolution de la quantité d'énergie électrique produite sur un an par ladite deuxième entité de production d'énergie électrique à partir d'énergie renouvelable (120) et distribuée sur ledit réseau (200) ;
- comparer ledit profil d'évolution du potentiel énergétique total produit sur un an sur ladite zone géographique avec ledit profil d'évolution de la demande d'énergie électrique estimée, ledit profil d'évolution dudit potentiel énergétique total produit sur un an correspondant à la somme dudit profil d'évolution de ladite quantité d'énergie électrique distribuée sur un an par ladite première entité de production d'énergie électrique (110) et dudit profil d'évolution de la quantité d'énergie électrique produite sur un an par ladite deuxième entité de production d'énergie électrique à partir d'énergie renouvelable (120) ;
- modifier l'étendue de ladite zone géographique ou la quantité d'énergie électrique distribuée sur ledit réseau par ladite entité de production de principale (110) si ledit profil d'évolution dudit potentiel énergétique annuel total de ladite zone géographique est inférieur au profil d'évolution de ladite demande ;
- déterminer l'écart minimum (Eₘᵢₙ) et l'écart maximum (Eₘₐₓ) entre ledit profil d'évolution dudit potentiel énergétique total produit sur un an et ledit profil d'évolution de ladite demande d'énergie électrique sur un an, ledit écart minimum et ledit écart maximum formant une fenêtre de pilotage ;
- comparer ladite fenêtre de pilotage déterminée lors de l'étape précédente avec un intervalle de production optimale d'énergie électrique de ladite troisième entité de production d'énergie électrique (130) apte à fonctionner en suivi de charge ;
- modifier l'étendue de ladite zone géographique et/ou dimensionner ladite troisième entité de production (130) et/ou, dans l'hypothèse où la troisième entité de production est formée par un ou plusieurs modules de puissance identique, adapter le nombre de modules de puissance formant ladite troisième entité de production (130) de manière à ce que ladite fenêtre de pilotage soit comprise dans intervalle de production optimale de ladite troisième entité de production d'énergie électrique (130).

12. Méthode d'optimisation d'un système de production et de distribution d'énergie électrique (100) selon la revendication précédente **caractérisée en ce que** ledit intervalle de production optimale de ladite troisième entité de production d'énergie électrique (130) se situe entre 40% et 80% de la puissance maximale de ladite entité (130) ou de chaque module de puissance formant ladite troisième entité de production.

## Patentansprüche

1. System zur Erzeugung und Ausgabe von elektrischer Energie (100) auf einem Stromnetz (200), das durch eine bestimmte graphische Zone begrenzt ist, umfassend:
- eine erste Einheit zur Erzeugung von elektrischer Energie (110), bezeichnet als Haupteinheit, die im Dauerbetrieb funktioniert und wenigstens einen Teil der auf dem Netz (200) erzeugten elektrischen Energie erzeugt;
- eine zweite Einheit zur Erzeugung elektrischer Energie ausgehend von erneuerbarer Energie (120), die keinen Energiespeichermitteln zugeordnet ist und intermittierend die auf dem genannten Netz (200) erzeugte Energie erzeugt;
- eine dritte Einheit zur Erzeugung von elektrischer Energie (130), die geeignet ist, im Lastfolgebetrieb zu funktionieren und die geeignet ist, die auf dem genannten Netz (200) erzeugte Energie zu liefern;
wobei das genannte System derart ausgelegt ist, dass das Entwicklungsprofil des gesamten energetischen Potenzials über ein Jahr der genannten geographischen Zone, das der Summe des Entwicklungsprofils der elektrischen Energiemenge entspricht, die über ein Jahr von der genannten Haupteinheit (110) zur Erzeugung von elektrischer Energie ausgegeben wird, und des Entwicklungsprofils der elektrischen Energiemenge, die über ein Jahr von der genannten zweiten Einheit zur Erzeugung elektrischer Energie ausgehend von erneuerbarer Energie (120) ausgegeben wird, niedriger ist als das Entwicklungsprofil der Nachfrage nach elektrischer Energie über ein Jahr des genannten Netzes (200), das von der genannten bestimmten geographischen Zone begrenzt wird.

2. System zur Erzeugung und Ausgabe von elektrischer Energie (100) gemäß dem voranstehenden Anspruch, **dadurch gekennzeichnet, dass** die genannte Haupteinheit (110) zur Erzeugung von elektrischer Energie wenigstens 50 % der notwendigen elektrischen Energie ausgibt, um den Bedarf des genannten Netzes (200) zu decken.

3. System zur Erzeugung und Ausgabe von elektrischer Energie (100) gemäß einem der voranstehenden Ansprüche, **dadurch gekennzeichnet, dass** die genannte erste Einheit zur Erzeugung (110) und die genannte dritte Einheit zur Erzeugung von elektrischer Energie (130), die geeignet ist, im Lastfolgebetrieb zu funktionieren, durch eine und dieselbe Einheit zur Erzeugung gebildet sind.

4. System zur Erzeugung und Ausgabe von elektrischer Energie (100) gemäß einem der voranstehenden Ansprüche, **dadurch gekennzeichnet, dass** die genannte dritte Einheit zur Erzeugung elektrischer Energie (130) durch ein einzige Modul oder durch eine Vielzahl von Modulen mit identischer Leistung gebildet ist.

5. System zur Erzeugung und Ausgabe von elektrischer Energie (100) gemäß dem voranstehenden Anspruch, **dadurch gekennzeichnet, dass** die Leistung jedes Moduls der genannten dritten Einheit zur Erzeugung von elektrischer Energie (130) zwischen 100 MWe und 500 MWe inbegriffen ist.

6. System zur Erzeugung und Ausgabe von elektrischer Energie (100) gemäß einem der voranstehenden Ansprüche, **dadurch gekennzeichnet, dass** die genannte dritte Einheit zur Erzeugung von elektrischer Energie (130) ein kleiner Kernreaktor ist.

7. System zur Erzeugung und Ausgabe von elektrischer Energie (100) gemäß einem der voranstehenden Ansprüche, **dadurch gekennzeichnet, dass** die genannte zweite Einheit zur Erzeugung elektrischer Energie ausgehend von erneuerbarer Energie (120) und / oder die genannte dritte Einheit zur Erzeugung von elektrischer Energie (130) in der genannten geographischen Zone angesiedelt ist.

8. System zur Erzeugung und Ausgabe von elektrischer Energie (100) gemäß dem voranstehenden Anspruch, **dadurch gekennzeichnet, dass** das genannte System derart ausgelegt ist, dass ein Steuerfenster, das durch die Mindestabweichung (Eₘᵢₙ) und die Höchstabweichung (Eₘₐₓ) zwischen dem genannten Entwicklungsprofil des gesamten Energiepotenzials, das über ein Jahr erzeugt wird, und dem genannten Entwicklungsprofil der Nachfrage nach elektrischer Energie über ein Jahr des genannten Netzes (200) in einem optimalen Erzeugungsintervall der genannten dritten Einheit zur Erzeugung elektrischer Energie (130) inbegriffen ist.

9. System zur Erzeugung und Ausgabe von elektrischer Energie (100) gemäß dem voranstehenden Anspruch, **dadurch gekennzeichnet, dass**, damit das Steuerfenster in dem optimalen Erzeugungsintervall der genannten dritten Einheit zur Erzeugung von elektrischer Energie (130) inbegriffen ist, die genannte Auslegung per Neudimensionierung der Leistung der genannten dritten Einheit zur Erzeugung von elektrischer Energie (130) realisiert ist.

10. System zur Erzeugung und Ausgabe von elektrischer Energie (100) gemäß einem der voranstehenden Ansprüche, **dadurch gekennzeichnet, dass** die genannte dritte Einheit zur Erzeugung von elektrischer Energie (130) durch wenigstens ein Leistungsmodul gebildet ist; damit das genannte Steuerfenster in dem optimalen Produktionsintervall der genannten dritten Einheit zur Erzeugung von elektrischer Energie (130) inbegriffen ist, ist die genannte Auslegung dabei durch die Anpassung der Anzahl von Leistungsmodulen realisiert, die die genannte dritte Einheit zur Erzeugung (130) auf der genannten bestimmten geographischen Zone bildet.

11. Optimierungsmethode eines Systems zur Erzeugung und Ausgabe von elektrischer Energie (100) gemäß einem der voranstehenden Ansprüche, wobei die genannte Optimierungsmethode die Stufen umfasst, bestehend aus:
- Schätzung eines Entwicklungsprofils der Nachfrage nach elektrischer Energie des genannten Netzes (200), das durch die genannte bestimmte geographische Zone begrenzt ist, über ein Jahr;
- Berechnung eines Entwicklungsprofils der elektrischen Energiemenge, die über ein Jahr von der genannten ersten Einheit zur Erzeugung von elektrischer Energie (110) auf dem genannten Netz (200) ausgegeben wird;
- Beurteilung eines Entwicklungsprofils der elektrischen Energiemenge, die über ein Jahr von der genannten zweiten Einheit zur Erzeugung von elektrischer Energie ausgehend von erneuerbarer Energie (120) erzeugt wird und auf dem genannten Netz (200) ausgegeben wird;
- Vergleich des genannten Entwicklungsprofils des gesamten erzeugten Energiepotenzials, das über ein Jahr auf der genannten geographischen Zone erzeugt wird, mit dem genannten Entwicklungsprofil der geschätzten Nachfrage nach elektrischer Energie, wobei das genannte Entwicklungsprofil des genannten gesamten, über ein Jahr erzeugten Energiepotenzials der Summe des genannten Entwicklungsprofils der genannten elektrischen Energiemenge entspricht, die über ein Jahr von der genannten ersten Einheit zur Erzeugung elektrischer Energie (110) des genannten Entwicklungsprofils der genannten elektrischen Energiemenge entspricht, die über ein Jahr von der genannten zweiten Einheit zur Erzeugung von elektrischer Energie ausgehend von erneuerbarer Energie (120) erzeugt wurde;
- Änderung des Umfangs der genannten geographischen Zone oder der elektrischen Energiemenge, die auf dem genannten Netz von der genannten Haupteinheit zur Erzeugung (110) ausgegeben wird, wenn das genannte Entwicklungsprofil des gesamten jährlichen Energiepotenzials der genannten geographischen Zone niedriger ist als das Entwicklungsprofil der genannten Nachfrage;
- Bestimmung der Mindestabweichung (Eₘᵢₙ) und der Höchstabweichung (Eₘₐₓ) zwischen dem genannten Entwicklungsprofil des genannten gesamten Energiepotenzials, das über ein Jahr erzeugt wird, und dem genannten Entwicklungsprofil der genannten Nachfrage nach elektrischer Energie über ein Jahr, wobei die genannte Mindestabweichung und die genannte Höchstabweichung ein Steuerfenster bilden;
- Vergleich des genannten Steuerfensters, das bei der voranstehenden Stufe bestimmt wurde, mit einem optimalen Erzeugungsintervall elektrischer Energie der genannten dritten Einheit zur Erzeugung elektrischer Energie (130), die geeignet ist, im Lastfolgebetrieb zu funktionieren;
- Änderung des Umfangs der genannten geographischen Zone und / oder Auslegung der genannten dritten Einheit zur Erzeugung (130) und / oder, unter der Hypothese, in der die dritte Einheit zur Erzeugung durch ein oder mehrere identische Leistungsmodul(e) gebildet ist, Anpassung der Anzahl der Leistungsmodule, die die genannte dritte Einheit zur Erzeugung (130) bilden, derart, dass das genannte Steuerfenster in dem optimalen Erzeugungsintervall der genannten dritten Einheit zur Erzeugung elektrischer Energie (130) inbegriffen ist.

12. Optimierungsmethode eines Systems zur Erzeugung und Ausgabe von elektrischer Energie (100) gemäß dem voranstehenden Anspruch, **dadurch gekennzeichnet, dass** das genannte optimale Erzeugungsintervall der genannten dritten Einheit zur Erzeugung elektrischer Energie (130) zwischen 40 % und 80 % der maximalen Leistung der genannten Einheit (130) oder jedem Leistungsmodul angesiedelt ist, das die genannte dritte Einheit zur Erzeugung bildet.

## Claims

1. System for producing and distributing electrical energy (100) on an electrical grid (200) defined by a given geographic area comprising:
- A first entity for producing electrical energy (110), said main entity, operating continuously and producing at least a portion of electric power generated on said grid (200);
- A second entity producing electricity from renewable energy (120), not associated with energy storage means, intermittently producing electrical energy produced on said grid (200);
- A third entity for producing electrical energy (130) able to operate as load following and adapted to supply power generated on said grid (200);
**characterised in that** said system is dimensioned such that the change profile of the total energy potential over a year of said geographical area, corresponding to the sum of the change profile in the amount of electrical energy distributed over one year by said main electrical energy production entity (110) and of the change profile in the amount of electrical energy produced over one year by said second electrical energy production entity from renewable energy (120), is less than the change profile in the demand for electrical energy over one year of said grid (200) defined by said geographic area.

2. System for producing and distributing electrical energy (100) according to the preceding claim **characterised in that** said main energy production entity (110) distributes at least 50% of the electrical energy required to meet the demand of said grid (200).

3. System for producing and distributing electrical energy (100) according to one of the preceding claims **characterised in that** said first production entity (110) and said third entity for producing electrical energy (130) able to operate as load following are formed by the same production entity.

4. System for producing and distributing electrical energy (100) according to one of the preceding claims **characterised in that** said third entity for producing electrical energy (130) is formed by a single module or by a plurality of identical power modules.

5. System for producing and distributing electrical energy (100) according to the preceding claim **characterised in that** the power of each of the modules of said third entity for producing electrical energy (130) is between 100 MWe and 500 MWe.

6. System for producing and distributing electrical energy (100) according to one of the preceding claims **characterised in that** said third entity for producing electrical energy (130) is a small nuclear reactor.

7. System for producing and distributing electrical energy (100) according to one of the preceding claims **characterised in that** said second entity for producing electrical energy from renewable energy sources (120) and/or said third entity for producing electrical energy (130) is located in said given geographical area.

8. System for producing and distributing electrical energy (100) according to the preceding claim **characterised in that** said system is dimensioned in such a way that a control window, defined by the minimum deviation (Eₘᵢₙ) and the difference maximum (Eₘₐₓ) between said change profile of the total energy potential produced over one year and said change profile in the demand for electrical energy over one year of said grid (200), is within a range of optimal production of said third entity for producing electrical energy (130).

9. System for producing and distributing electrical energy (100) according to the preceding claim **characterised in that** said dimensioning so that said control window is in the range of optimal production of said third entity for generating electrical energy (130) is achieved by redimensioning the power of said third entity for producing electrical energy (130).

10. System for producing and distributing electrical energy (100) according to any preceding claim **characterised in that** said third entity for producing electrical energy (130) is constituted by at least one power module; said dimensioning so that said control window is in the range of optimal production of said third entity for producing electrical energy (130) being achieved by adjusting the number of power modules forming said third output entity (130) on said given geographical area.

11. Method for optimising a system for producing and distributing electrical energy (100) according to one of the preceding claims, said optimising method comprising the steps of
- estimating over one year a profile of evolution of the electricity demand of said grid (200), defined by said geographic area;
- calculating a change profile of the amount of electric power distributed over one year by said first entity for producing electrical energy (110) over said grid (200);
- evaluating a change profile of the amount of electrical energy produced over one year by said second entity producing electricity from renewable energy (120) and distributed on said grid (200);
- comparing said change profile of the total energy potential produced over one year on said geographical area with said change profile in the estimated demand for electrical energy, said change profile of said total energy potential produced over one year corresponding to the sum of said change profile of said amount of electrical energy distributed over one year by said first entity for producing electrical energy (110) and of said change profile of the amount of electrical energy produced over one year by said second entity for producing electricity from renewable energy (120);
- modifying the scope of the said geographical area or the amount of electric energy distributed on said grid (200) by said main production entity (110) if said change profile of said total annual energy potential of said geographical area is less than the change profile of said demand;
- determining the minimum distance (Eₘᵢₙ) and the maximum deviation (Eₘₐₓ) between said change profile of said total energy potential produced over one year and said change profile of said electricity demand over one year, said minimum distance and said maximum deviation forming a control window;
- comparing said control window determined in the previous step with an optimal production range of electrical power from said third entity for producing electrical energy (130) able to operate as load following;
- modifying the extent of said geographical area and/or dimensioning said third production entity (130) and/or, in the event that the third production entity is formed by one or more identical power modules, adapting the number of power modules forming said third production entity (130) so that said pilot window is within optimal production interval of said third entity for producing electrical energy (130).

12. A method of optimising a system of producing and distributing electrical energy (100) according to the preceding claim **characterised in that** said optimum production interval of said third entity for producing electrical energy (130) is between 40% and 80% of the maximum power of said entity (130) or of each power module forming said third production entity.
